# EUROPÄISCHE PATENTSCHRIFT

(11) **EP 0 708 729 B1**
(45) Veröffentlichungstag und Bekanntmachung des Hinweises auf die Patenterteilung: **23.09.1998**
(21) Anmeldenummer: 94924277.0
(22) Anmeldetag: 22.07.1994
(51) Int. Cl.: B65D 77/06, B29C 49/76, B29C 49/48

(54) **PALETTENCONTAINER**
PALLET CONTAINER
CONTENEUR DE PALETTES

(30) Priorität: 23.07.1993 DE 9311004 U
(43) Veröffentlichungstag der Anmeldung: 01.05.1996
(73) Patentinhaber: MAUSER-WERKE GmbH, D-50321 Brühl (DE)
(72) Erfinder: PRZYTULLA, Dietmar, D-50170 Kerpen (DE)
(86) Internationale Anmeldenummer: EP9402423
(87) Internationale Veröffentlichungsnummer: WO9503231

(56) Entgegenhaltungen:
- EP-A- 0 443 500
- DE-A- 1 479 480

## Beschreibung

Die Erfindung betrifft einen Palettencontainer mit einer Bodenpalette, mit einem darauf angeordneten Kunststoff-Innenbehälter und mit einem den Kunststoff-Innenbehälter dicht umschließenden Stützmantel, der bodenseitig fest (ggf. lösbar) mit der Bodenpalette verbunden ist. Weiterhin betrifft die Erfindung eine besondere Blasform und ein verbessertes Verfahren zur Herstellung des Kunststoff-Innenbehälters für diesen Palettencontainer.

Derartige Palettencontainer mit einem blasgeformten Innenbehälter aus thermoplastischem Kunststoff sind beispielsweise aus der DE-OS 41 17 159 oder der DE-PS 38 19 911 bekannt.
Bei einem normalen Palettencontainer verlaufen die Quetschnähte in dem auf der Bodenpalette aufgestellten Kunststoff-Innhenbehälter grundsätzlich im Behälteroberboden längs über die obere Einfüllöffnung bzw. seitlich neben der Einfüllöffnung und entsprechend im Behälterunterboden beginnend an dem seitlich am Behälterboden angeordneten Auslaufstutzen für das Auslaufventil. Entlang der Quetschnähte ist die Behälterwandung durch den Abquetschvorgang beim Schließen der Blasformhäflten etwas verdickt ausgebildet. Üblicherweise wird der Kunststoffbehälter in der Blasform in Überkopfpositionierung hergestellt, d.h. der durchmessergrößere Einfüllstutzen in der Mitte des Behälteroberbodens befindet sich unten in der Blasform. Dabei wird der Einfüllstutzen am Blasdorn ausgeformt und durch die entsprechenden anliegenden Blasformhälften kalibriert. Der Unterboden des Kunststoffbehälters befindet sich oben in der Blasform und die bodenseitige Basisfläche für den Stutzen des seitlichen Auslaufventiles wird im Nahbereich einer Seitenwandung zur oberen Begrenzungsfläche der Blasform, nämlich dem Behälterunterboden in eine dort angeordnete entsprechende Vertiefung ausgeblasen. In die Basisfläche wird später eine entsprechende Bohrung eingebracht und der Stutzen für das Auslaufventil wird auf diese Basisfläche aufgeschweißt. Die im Behälterunterboden wie im Behälteroberboden durch Abquetschen des schlauchförmigen Vorformlinges entstehenden Quetschnähte weisen aufgrund ihrer verdickten Materialstärke den Nachteil auf, daß sie ungleichmäßig langsamer als die sie umgebenden dünneren Wandungsteile abkühlen, wobei innerhalb der Quetschnähte Zugspannungen entstehen, die nach Entnahme des Behälters aus der Blasform zu einem Einfallen bzw. Einsenken des Oberbodens mit dem Einfüllstutzen und zu einem Hochziehen des Unterbodens mit dem seitlich angeordneten Auslaufventil führen. Die Einsenkung des Oberbodens kann Ursache dafür sein, daß sich z.B. bei Lagerung eines Palettenbehälters im Freien Regenwasser im Spundgehäuse um den Einfüllstutzen ansammelt. Noch nachteiliger ist allerdings der eingezogene bzw. leicht nach innen bombierte Unterboden, wodurch eine optimale Restentleerung bzw. ein vollständiges Auslaufen der Restflüssigkeit aus dem Kunststoffinnenbehälter erschwert wird. Nachteilig bei üblichen Palettencontainern ist weiterhin:
1. Bei Rechteckcontainern ist die Quetschnaht im Ober- und Unterboden mit ca. 1200 mm länger als die Höhe einer Seitenwandung mit ca. 1000 mm;
2. Die vier Seitenflächen des Kunststoff-Innenbehälters werden durch den Stützmantel gehalten, während die verschweißte Quetschnaht im Oberboden als kritische Stelle des Innenbehälters frei liegt;
3. Der Auslaufstutzen ist ein Einlegeteil oder wird nachträglich aufgeschweißt. Auch bei dieser kritischen Stelle ergeben sich durch schlechte Verschweißung häufig Schwierigkeiten. Der angesetzte Auslaufstutzen ist insbesondere beim Diagonalfall die empfindlichste Stelle.

Es ist Aufgabe der vorliegenden Erfindung, einen verbesserten Palettencontainer anzugeben, bei dem die geschilderten Nachteile derart beseitigt werden, daß der Kunststoff-Innenbehälter formstabil bleibt und ein schrumpfungsbedingtes Absenken des Oberbodens bzw. Einziehen des Unterbodens vermieden wird.

Diese Aufgabe wird erfindungsgemäß dadurch gelöst, daß bei der Blasformgebung des Kunststoff-Innenbehälters ein schlauchförmiger Vorformling zwischen die geöffneten Hätten einer aus zwei horizontal verfahrbaren Formhälften bestehenden Blasform über einen unten zwischen den geöffneten Formhälften angeordneten Blasdorn extrudiert wird, und nach Schließen der Blasformhälften die Blasluft über den Blasdorn in den schlauchförmigen Vorformling eingeblasen wird bis dieser sich an die Innenkontur der Blasform anlegt, wobei in besonderer Weise an dem Blasdorn der Auslaufstutzen für das bodenseitige seitliche Auslaufventil des Innenbehälters ausgeformt und kalibriert wird, und wobei der Spundstutzen für die durchmessergrößere Einfüllöffnung aus dem mittleren Bereich des schlauchförmigen Vorformlings in eine im mittleren Bereich der Blasform befindliche entsprechende Vertiefung ausgeformt und dabei gleichzeitig ein Außengewinde an dem Spundstutzen angeblasen wird. Während des Blasformvorganges bleibt die Einfüllöffnung des Spundstutzens also geschlossen; sie wird erst nach Herausnahme des Kunststoffbehälters aus der Blasform durch Herausschneiden einer der Spundöffnung entsprechenden Kunststoffscheibe aus dem oberen Spundstutzen erzeugt.
Der Kunststoff-Innenbehälter wird also im Gegensatz zu der herkömmlichen Art und Weise in einer um 90° gedrehten Positionierung in der Blasform hergestellt.

Die besondere Blasformmaschine zum Herstellen des Kunststoff-Innenbehälters für den erfindungsgemäßen Palettencontainer besteht aus einer zwei horizontal verfahrbare Formhälften umfassenden Blasform, die bodenseitig einen Blasdom und ggf. einen Spreizdorn derart aufweist, daß an dem Blasdom mit vergleichsweise kleinerem Durchmesser der Stutzen des Auslaufventils des Kunststoff-Innenbehälters ausformbar und kalibrierbar ist, und daß weiterhin etwa in halber Höhe mittig seitlich in der Blasform (bzw. hälftig in jeder Blasformhälfte) eine runde Vertiefung vorgesehen ist, in welcher der Spundstutzen der zunächst geschlossenen Einfüllöffnung des Kunststoff-Innenbehälters ausformbar ist.

Der erfindungsgemäße Palettencontainer zeichnet sich also dadurch aus, daß der Kunststoff-Innenbehälter an zwei diametral gegenüberliegenden Bereichen der vertikalen Seitenwandungen, vorzugsweise etwa in der Wandungsmitte verlaufend, die verschweißten Quetschnähte des schlauchförmigen Vorformlings aufweist. Bei der bevorzugten Ausführung ist eine Quetschnaht direkt oberhalb des bodenseitigen Auslaufventils vertikal in der Seitenwandung verlaufend ausgebildet, während die andere Quetschnaht entsprechend vertikal verlaufend in der gegenüberliegenden (rückwärtigen) Seitenwandung angeordnet ist. Bei einem Innendruckaufbau ergibt sich ein vorteilhafteres Verhalten des Innenbehälters durch die kürzeren Schweißnähte und durch die geschützte Lage der beiden Schweißnähte im Abdeckungsbereich des Stützmantels. Bei dem erfindungsgemäßen Palettencontainer mit dem besonderen Kunststoffinnenbehälter, hergestellt nach der zuvor beschriebenen Art treten die geschilderten Nachteile nicht mehr auf. Der Behälteroberboden bleibt eben und fällt bzw. zieht sich nicht mehr ein und insbesondere der Behälterunterboden mit leichtem trichterförmigem Gefälle zu dem seitlichen Auslaufventil bleibt eben und glatt auf der angepaßt ausgebildeten Oberfläche der Bodenpalette aufliegend, so daß eine vollständige Restentleerung des flüssigen Behälterinhaltes optimal gewährleistet ist.
Dadurch, daß der Kunststoff-Innenbehälter um 90° gedreht "querliegend" in der Blasform hergestellt wurde, beziehungsweise anders ausgedrückt der schlauchförmige Vorformling nunmehr im Kunststoff-Innenbehälter des Palettencontainers "querverlaufend" angeordnet ist, wird eine höhere Festigkeit des Bauteils in Richtung der Längsachse erreicht. Diese besondere Ausbildung und die schrumpfungsbedingt vorgespannten Seitenwandungen des Innenbehälters mit den Quetschnähten wirken dem hydrostatischen Innendruck eines befüllten Palettencontainers und dem dadurch bedingten Ausbeulbestreben entgegen.
Dadurch, daß nunmehr auch der Stutzen des Auslaufventils exakt reproduzierbar am Blasdorn kalibriert wird, ist dieses kritische Bauteil des Kunststoffbehälters mit ganz präzise ausgebildetem Gewinde oder Ringflansch ausformbar, während der Spundstutzen der Einfüllöffnung mit angeformtem Außengewinde lediglich seitlich etwa in halber Höhe in der Blasform ausgeblasen wird. Dieses im Behälteroberboden versenkt und damit geschützt angeordnete Bauteil unterliegt auch bei einem gefüllten Behälter auch bei Extrembelastungen (wie z. B. einem Behälterabsturz) keinen besonderen Anforderungen.

In Ausgestaltung der erfindungsgemäßen Blasform kann vorgesehen sein, daß innerhalb der seitlichen runden Vertiefung zum Ausblasen des Einfüllöffnung-Spundstutzens eine Blasnadeleinrichtung angeordnet ist. Durch diese Blasnadelanordnung wird z.B. weitere Blasluft in den Innenbehälter eingeblasen. In einer besonderen verfahrenstechnischen Variante könnte aber auch nach dem Fertigblasen der Behälterkonturen ein Kühlmedium wie z.B. flüssiger Stickstoff oder ein anderes unterkühltes Gas zum Erzielen einer höheren Abkühlgeschwindigkeit und einer frühzeitigeren Entnahme des Kunststoffbehälters aus der Blasform eingspritzt bzw. eingedüst werden.

In einer weiteren Ausgestaltungsvariante der Blasform ist vorgesehen, daß zur Verlängerung der verschweißten Kunststofflächen innerhalb der Quetschnaht die Abquetschkanten oben und unten in den beiden Blasformhälften sich jeweils entsprechend ergänzend wellenlinienförmig oder zickzackförmig ausgebildet sind. Die dadurch erzeugte entsprechend zickzackfömig in der Seitenwandung des Kunstoffbehälters verlaufende Quetschnaht weist eine verbesserte Reißfestigkeit auf. Diese Verfahrensvariante ist besonders für mehrschichtige co-extrudierte blasgeformte Kunststoffbehälter geeignet.

Mit der erfindungsgemäßen Ausgestaltung des Palettencontainers bzw. des Kunststoffinnenbehälters werden also folgende Vorteile erzielt:
- es ergibt sich kein Verzug mehr in der Bodenauslaufrinne und damit ein verbesserter bzw. vollständiger Auslauf der Restflüssigkeit,
- die Schweißnähte sind kürzer, jetzt 1000 mm statt vorher 1200 mm,
- der Auslaufstutzen ist integral einteilig aus dem Schlauch geformt, nicht mehr angeschweißt oder eingeklebt,
- das Blasteil (Innenbehälter) ist besser blasformbar, da die Höhe des Palettencontainers geringer ist als die Länge,
- die Schweißnähte haben eine bessere Lage, sie sind im Stützmantelbereich geschützt und gestützt und
- der Palettencontainer wird insgesamt sicherer durch weniger Fehlerquellen.

In einer anderen Ausführungsform ist vorgesehen, daß bei dem Kunststoff-Innenbehälter die Quetschnähte des schlauchförmigen Vorformlings in zwei diametral gegenüberliegenden vertikalen Eckbereichen zweier benachbarter Seitenwandungen verlaufen. So können die Schweißnähte also in dem vorderen linken und dem hinteren rechten Eckbereich oder in dem vorderen rechten und dem hinteren linken Eckbereich der Seitenwandungen des auf die Bodenpalette aufgestellten Kunststoff-Innenbehälters ausgebildet sein. Bei einer Anordnung der Schweißnähte in den gegenüberliegenden Eckbereichen ergeben sich beim Falltest und beim Innendrucktest geringere Zugspannungen dadurch, daß der Innenbehälter bestrebt ist, sich einer Kugelgestalt anzunähern, wobei die flächigen Seitenwandungen nach außen gewölbt werden und die Eckbereiche mit Winkelvergrößerung nach innen nachgeben können.

Die Erfindung wird nachfolgend anhand eines in den Zeichnungen schematisch dargestellten Ausführungsbeispieles näher erläutert und beschrieben. Es zeigen:
- Figur 1: einen erfindungsgemäßen Palettencontainer von der Vorderseite mit Auslaufventil und Clinchblech,
- Figur 2: einen teilweise aufgeschnittenen Kunststoff-Innenbehälter ebenfalls von der Vorderseite mit Auslaufventil,
- Figur 3: die schematische Ansicht einer Blasformhälfte,
- Figur 4: einen Kunststoff-Innenbehälter mit anhängenden Butzenstücken,
- Figur 5: einen Kunststoff-Innenbehälter in perspektivischer Ansicht und
- Figur 6: einen Teilschnitt durch den Auslauf-Stutzenbereich des Kunststoff-Innenbehälters.

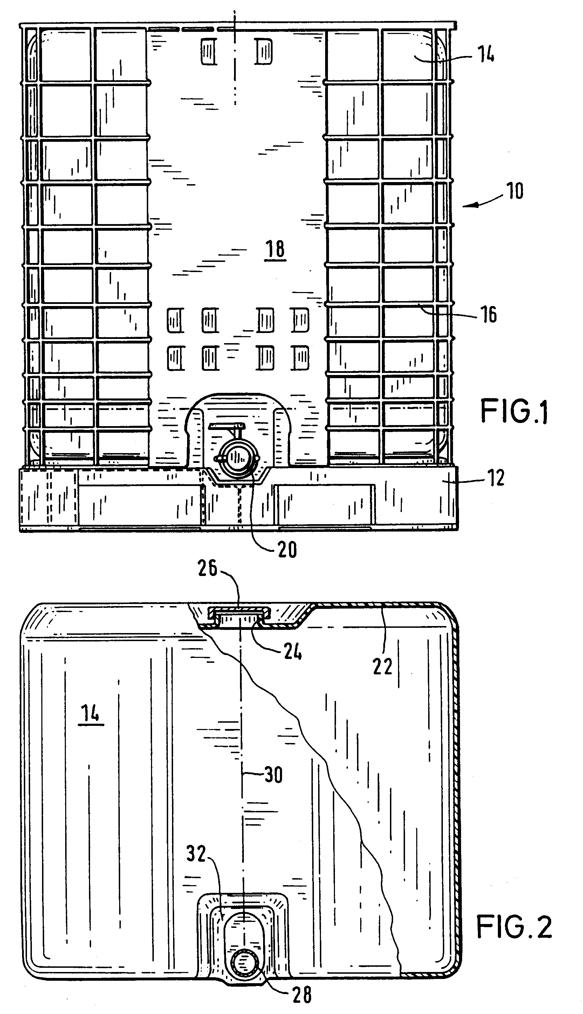

Figur 1 zeigt einen erfindungsgemäßen Palettencontainer 10 mit einer Bodenpalette 12, vorzugsweise aus recyceltem Kunststoff-Regenerat, einen darauf angeordneten Kunststoffbehälter 14 und einen den Kunststoffbehälter 14 dicht umschließenden Stützmantel 16, der bodenseitig fest mit der Bodenpalette verbunden ist. Der Stützmantel 16 besteht vorzugsweise aus sich kreuzenden Rohrstäben bzw. Gitterstäben und ist fest aber leicht lösbar z.B. mittels durch Bohrungen in der Bodenpalette 12 durchgesteckter verlängerter Gitterstäbe, die von unten verschraubt sind, mit der Bodenpalette 12 verbunden. Der Stützmantel 16 weist auf seiner Vorderseite ein um die vertikalen Gitterstäbe umgebördeltes Clinchblech 18 und bodenseitig direkt über der Bodenpalette 12 ein unteres Auslaufventil 20 (z. B. eine 3 Zoll Auslauf-Armatur) auf.

In Figur 2 ist der Kunstoff-Innenbehälter 14 in teilgeschnittener Seitenansicht dargestellt, wobei mittig im Behälteroberboden 22 der in einer sich quer über den Oberboden erstreckenden Vertiefung eingesenkte Einfüllstutzen 24 der vergleichsweise durchmessergroßen Einfüllöffnung (ca. 150 mm Durchmesser) mit aufgesetztem Schraubdeckel 26 erkennbar ist. Unten in der vorderen Seitenwandung ist in Höhenebene des Behälterunterbodens der angeformte Auslaufstutzen 28 (ca. 60 mm Durchmesser) für das Auslaufventil 20 ausgebildet. Der Auslaufstutzen 28 mitsamt Auslaufventil 20 sind in einer in der vorderen Seitenwandung ausgebildeten, nach innen eingezogenen Mulde bzw. Vertiefung 32 versenkt und damit geschützt angeordnet. Insbesondere beim Diagonalfall eines Palettencontainers treten nun keine besonderen Probleme mehr an dieser sonst sehr kritischen Stelle auf.
In der Vorderwandung des Kunststoffbehälters 14 und gleichfalls (jedoch nicht sichtbar) entsprechend in der gegenüberliegenden hinteren Wandung ist die am Auslaufstutzen 28 beginnende, vertikal nach oben verlaufende Quetschnaht 30 des schlauchförmigen Vorformlings (zum besseren Erkennen) als dickere Linie eingezeichnet. Diese Quetschnaht 30 kann auch zickzackförmig verlaufend ausgebildet sein.

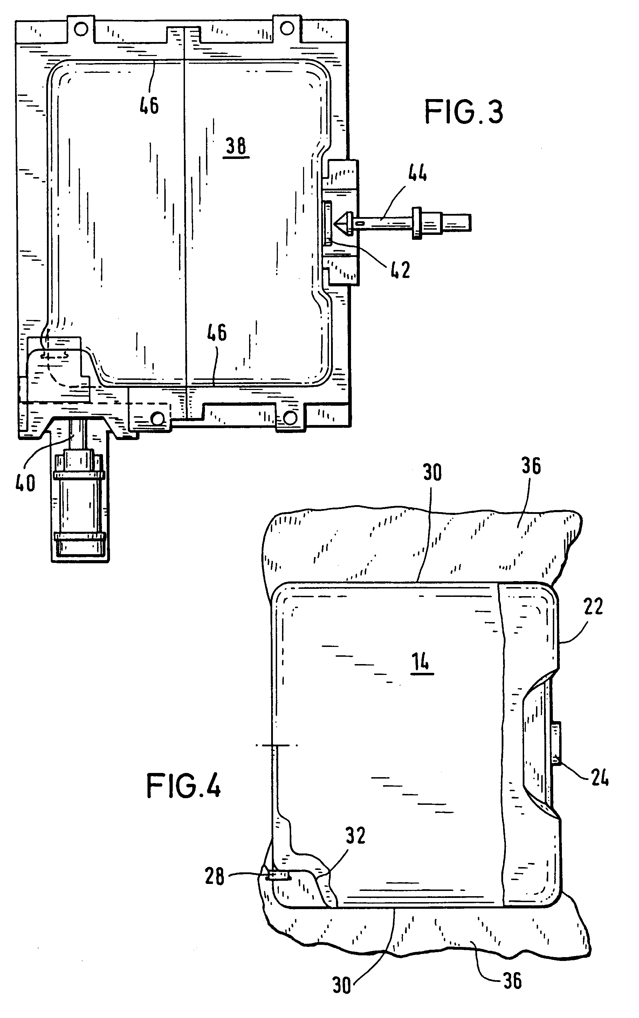

In Figur 3 ist eine schematische Ansicht einer Blasformhälfte 38 gezeigt. Oben und unten befindet sich der Abquetschbereich 46 für den schlauchförmigen Vorformling. Unten links ist die Blasdorn-Einrichtung 40 angeordnet. Der Blasdorn ist in Axialrichtung verschiebbar und muß nicht mehr aus dem Auslaufstutzen 28 herausgedreht werden, wie dies z. B. bei einem Spundloch mit Innengewinde erforderlich wäre, sondern ist einfach herauszuziehen. Auf der rechten Seite in halber Höhe der Blasformhälfte 38 ist eine runde Vertiefung 42 in die Blasform eingebracht. In dieser Vertiefung 42 wird der Gewindestutzen 24 mit angeblasenem Außengewinde für die Schraubkappe 26 der Einfüllöffnung ausgeformt. Innerhalb der Vertiefung 42 mündet eine Blasnadel-Einrichtung 44 ein. Hier wird die radial verschiebbare Blasnadel durch den schlauchförmigen Vorformling gestoßen und zusätzliche Blasluft eingeblasen. Der Innenbehälter wird also im Gegensatz zur herkömmlichen Herstellungsweise in einer um 90 ° gedrehten Position in der Blasform erblasen.

Figur 4 zeigt dazu einen soeben aus der Blasform entnommenen KunststoffBehälter 14, an dem oben und unten an der Quetschnaht 30 jeweils noch die Butzenstücke 36 als Reststücke des schlauchförmigen Vorformlings hängen, die noch zu entfernen sind.

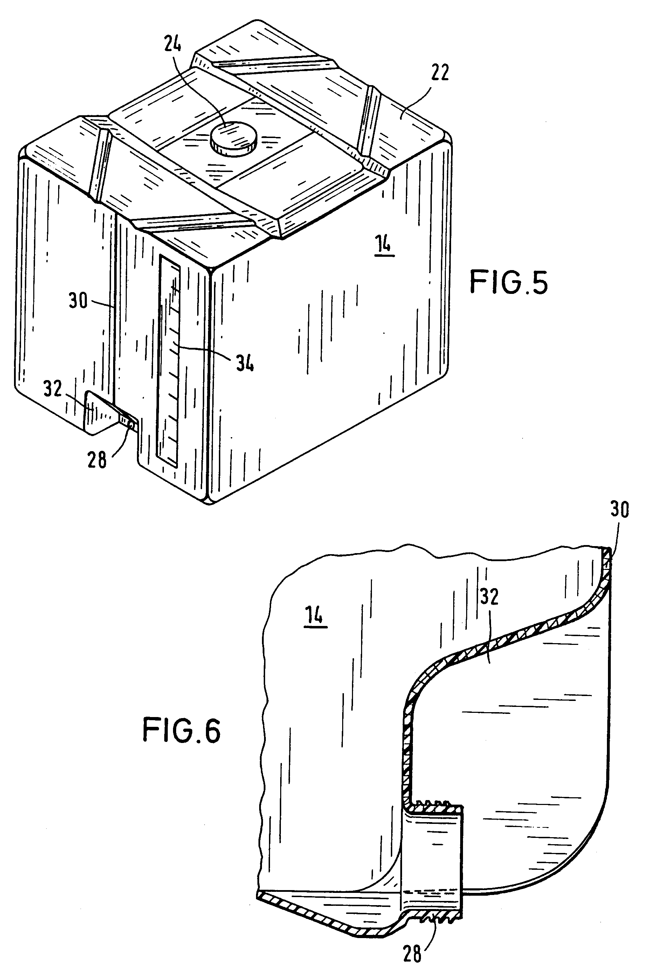

In Figur 5 ist der Kunststoff-Behälter 14 in perpektivischer Ansicht gezeigt. Im Oberboden 22 sind diagonal verlaufende Vertiefungen eingeformt, in welchen später Versteifungsstreben für den Gitter-Stützmantel verlaufen. In die vordere Seitenwandung ist weiterhin eine Meßskala 34 zum Ablesen der Füllstandes des flüssigen Füllgutes eingeformt. Deutlich erkennbar (extra dick eingezeichnet) ist ebenfalls die Quetschnaht 30 in der vorderen Seitenwandung. Unten mündet die Quetschnaht 30 in den Auslauf-Stutzen 28 ein. Dies wird auch noch einmal aus der in Figur 6 ersichtlichen Teilschnittdarstellung des Innenbehälters 14 deutlich. Zum besseren Erkennen der Quetschnaht 30 ist diese mit einer besonderen Schraffur gekennzeichnet.

Bei dem erfindungsgemäßen Palettencontainer liegt also der Auslaufventil-Anschlußstutzen 28 in der Mitte der Seitenwandung mit der einmündenden Schweißnaht 30 erstmalig voll im Schlauchquetschbereich um den Blasdorn 40 innerhalb des Schlauches. Das Gewinde oder ein Anschlußflansch wird an der Blasdorn-Einrichtung 40 von den Blasformhälften 38 exakt kalibriert ausgeformt; ein Anschweißen des Stutzens und Aufbohren des Behälters mit allen Unsicherheiten entfällt dadurch. Der Gewindestutzen bzw. Flanschstutzen 28 wird bereits während des Blasformvorganges als gebrauchsfertiges voll kalibiertes integrales Teil des Kunststoffbehälters 14 ausgebildet, wodurch eine wesentlich verbesserte Fallfestigkeit und Dichtigkeit des Palettencontainers erzielt wird.

Durch die erfindungsgemäßen Merkmale wird bei dem Palettencontainer nun gleichfalls der Vorteil erzielt, daß die Fertigung des Kunststoff-Innenbehälters qualitätsverbessert und sicherer wird. Die Länge der Quetschnähte wird durch deren Plazierung in den Seitenwandungen bei gleichen Behälterabmessungen von 1200 mm auf 1000 mm verkürzt. Hierdurch wird auch die Produktivität (Output) der Behälterfertigung durch Absenkung der Ausschußrate gesteigert.

## Patentansprüche

1. Palettencontainer (10) umfassend eine Bodenpalette (12), einen darauf angeordneten Kunststoffbehälter (14) und einen den Kunststoffbehälter (14) dicht umschließenden Stützmantel (16), der bodenseitig fest (aber lösbar) mit der Bodenpalette (12) verbunden ist,
**dadurch gekennzeichnet**, daß
der Kunststoff-Innenbehälter (14) an zwei diametral gegenüberliegenden Seitenwandungen etwa in der Wandungsmitte vertikal verlaufend die verschweißten Quetschnähte (30) des schlauchförmigen Vorformlings aufweist.

2. Palettencontainer nach Anspruch 1,
**dadurch gekennzeichnet**, daß
eine Quetschnaht (30) direkt oberhalb des bodenseitigen Auslaufventils (20) vertikal in der (vorderen) Seitenwandung verlaufend ausgebildet ist bzw. in den Auslaufstutzen (28) einmündet, während die andere Quetschnaht (30) entsprechend vertikal verlaufend in der gegenüberliegenden (hinteren) Seitenwandung angeordnet ist.

3. Palettencontainer nach Anspruch 2,
**dadurch gekennzeichnet,** daß
der Auslaufstutzen (28), ggf. mit angeformtem Anschlußgewinde oder Anschlußflansch zum Aufsetzen der Auslaufarmatur (20), integrales Teil des Kunststoffinnenbehälters (14) ist und einteilig mit dem Innenbehälter (14) aus dem schlauchförmigen Vorformling am Blasdorn kalibriert mit Auslaufstutzen (28) und Auslauföffnung ausgeformt ist.

4. Palettencontainer (10) umfassend eine Bodenpalette (12), einen darauf angeordneten Kunststoffbehälter (14) und einen den Kunststoffbehälter (14) dicht umschließenden Stützmantel (16), der bodenseitig fest (aber lösbar) mit der Bodenpalette (12) verbunden ist,
**dadurch gekennzeichnet**, daß
der Kunststoff-Innenbehälter (14) in zwei diametral gegenüberliegenen Eckbereichen zwischen zwei benachbarten Seitenwandungen vertikal verlaufend die verschweißten Quetschnähte (30) des schlauchförmigen Vorformlings aufweist.

5. Blasformmaschine zum Herstellen eines Kunststoff-Innenbehälters (14) für einen Palettencontainer (10) gemäß einem der Ansprüche 1 bis 4 in einer aus zwei horizontal verfahrbaren Formhälften (38) bestehenden Blasform, die bodenseitig einen Blasdorn (40) und ggf. einen Spreizdorn aufweist,
**dadurch gekennzeichnet**, daß
an dem Blasdorn (40) der Stutzen (28) des Auslaufventils (20) ausformbar und kalibrierbar ist, und daß etwa mittig seitlich in der Blasform (bzw. hälftig in jeder Blasformhälfte(38)) eine runde Vertiefung (42) vorgesehen ist, in welcher der Spundstutzen (24) der Einfüllöffnung des Kunststoffbehälters (14) ausformbar ist.

6. Blasformmaschine nach Anspruch 5,
**dadurch gekennzeichnet,** daß
innerhalb der seitlichen runden Vertiefung (42) eine Blasnadeleinrichtung (44) vorgesehen ist.

7. Blasformaschine nach Anspruch 5 oder 6,
**dadurch gekennzeichnet**, daß
die Abquetschkanten oben und unten in den Blasformhälften (38) zum Abquetschen des schlauchförmigen Vorformlings jeweils entsprechend wellenlinienförmig bzw. zickzackförmig ausgebildet sind.

8. Verfahren zur Herstellung eines Kunststoff-Innenbehälters (14) für einen Palettencontainer (10) gemäß einem der vorhergehenden Ansprüche 1 bis 4 mittels Blasformgebung in einer Blasformmaschine gemäß einem der Ansprüche 5 bis 7, wobei ein schlauchförmiger Vorformling von oben aus einer Extrusionsdüse zwischen die geöffneten Hälften einer aus zwei horizontal verfahrbaren Formhälften (38) bestehenden Blasform über einen unten zwischen den geöffneten Formhälften angeordneten Blasdorn (40) extrudiert wird, und nach Schließen der Blasformhälften (38) die Blasluft über den Blasdorn (40) in den schlauchförmigen Vorformling eingeblasen wird bis dieser sich an die Innenkontur der Blasform anlegt,
**dadurch gekennzeichnet,** daß
an dem Blasdorn (40) der Auslaufstutzen (28) für das bodenseitige Auslaufventil (20) des Kunststoff-Innenbehälters (14) ausgeformt und kalibriert wird, wobei der Spundstutzen (24) für die durchmessergrößere Einfüllöffnung aus dem mittleren Bereich des schlauchförmigen Vorformlings in eine etwa in halber Höhe im mittleren Bereich der Blasform befindliche entsprechende Vertiefung (42) ausgeformt und dabei gleichzeitig ein Außengewinde an dem Spundstutzen (24) angeblasen wird.

9. Verfahren nach Anspruch 8,
**dadurch gekennzeichnet**, daß
durch den Blasdorn (40) oder/und eine weitere separate Blasnadel (44) ein Kühlmedium zur schnelleren Abkühlung des Kunstoff-Innenbehälters (14) in diesen eingeblasen bzw. eingedüst wird.

## Claims

1. A pallet container (10) comprising a base pallet (12), a plastics container (14) arranged thereon and a supporting jacket (16) closely surrounding the plastics container (14) and fixedly (but detachably) connected at its base to the base pallet (12), characterised in that the plastics inner container (14) has the welded mash seams (30) of the tubular preform on two diametrically opposed sidewalls, the mash seams (30) extending vertically substantially in the centre of the wall.

2. A pallet container according to claim 1, characterised in that one mash seam (30) extends vertically in the (front) sidewall directly above the outlet valve (20) at the base, i.e. joins the outlet connection (28), while the other mash seam (30) extends vertically in the opposite (rear) sidewall in a corresponding manner.

3. A pallet container according to claim 2, characterised in that the outlet connection (28), optionally with a moulded-on connecting thread or connecting flange for attaching the outlet fitting (20), is an integral part of the plastics inner container (14) and is formed in one piece with the inner container (14) from the tubular preform with outlet connection (28) and outlet opening and defined on the blow mandrel.

4. A pallet container comprising a base pallet (12), a plastics container (14) arranged thereon and a supporting jacket (16) closely surrounding the plastics container (14) and fixedly (but detachably) connected at its base to the base pallet (12), characterised in that the plastics inner container (14) has the welded mash seams (30) of the tubular preform extending vertically in two diametrically opposed corner regions between two adjacent sidewalls.

5. A blow-moulding machine for manufacturing a plastics inner container (14) for a pallet container (10) according to any one of claims 1 to 4 in a blow mould comprising two horizontally movable mould halves (38) and having a blow mandrel (40) and, optionally, an expansion mandrel, characterised in that the connecting piece (28) of the outlet valve (20) can be formed and defined on the blow mandrel (40), and in that, substantially centrally in the side of the blow mould (or halfway in each blow-mould half (38)), a round recess (42) is provided, in which the bung connection (24) of the feed opening of the plastics container (14) is formable.

6. A blow-moulding machine according to claim 5, characterised in that a blow-pin device (44) is provided inside the lateral round recess (42).

7. A blow-moulding machine according to claim 5 or 6, characterised in that the flash edges at the top and bottom of the blow-mould halves (38) for squeezing the tubular preform have a corresponding undulating or zig-zag form.

8. A method of manufacturing a plastics inner container (14) for a pallet container (10) according to any one of the preceding claims 1 to 4 by means of blow moulding in a blow-moulding machine according to any one of claims 5 to 7, wherein a tubular preform is extruded from above from an extrusion die between the open halves of a blow mould comprising two horizontally movable mould halves (38) over a blow mandrel (40) arranged at the bottom between the open mould halves, and, after the blow-mould halves (38) are closed, the blowing air is blown via the blow mandrel (40) into the tubular preform until the latter rests against the inner contour of the blow mould, characterised in that the outlet connection (28) for the outlet valve (20) at the base of the plastics inner container (14) is formed and defined on the blow mandrel (40), the bung connection (24) for the feed opening of larger diameter being formed from the central region of the tubular preform in a corresponding recess (42) provided in the central region of the blow mould at substantially half the height thereof, and an external thread is simultaneously blown onto the bung connection (24).

9. A method according to claim 8, characterised in that a cooling medium for cooling down the plastics inner container (14) more quickly is blown or sprayed into the latter via the blow mandrel (40) and/or a further, separate blow-moulding pin (44).

## Revendications

1. Conteneur sur palette (10) comprenant une palette (12), un récipient en matière synthétique (14) disposé sur ladite palette et une enveloppe de support (16) entourant étroitement le récipient en matière synthétique (14) et fixé solidement (mais de manière amovible) sur la palette (12), *caractérisé en ce que* deux parois latérales diamétralement opposées du récipient en matière synthétique (14) comportent sensiblement dans leur zone médiane une ligne de jointure soudée (30) verticale de l'ébauche tubulaire.

2. Conteneur sur palette selon la revendication 1, *caractérisé en ce que* la ligne de jointure soudée (30) verticale se trouve directement au-dessus de la soupape de prélèvement (20) disposée du côté du fond dans la paroi latérale (avant), respectivement se prolonge directement jusque dans le manchon de sortie (28) tandis que l'autre ligne de jointure soudée (30) s'étend verticalement de façon correspondante dans la paroi latérale opposée (arrière).

3. Conteneur sur palette selon la revendication 2 *caractérisé en ce que* le manchon de sortie (28), en tant que de besoin pourvu d'un filetage ou d'un rebord de raccordement en vue de pouvoir y monter l'équipement (20) pour le prélèvement, constitue une partie intégrante du récipient intérieur en matière synthétique (14) et est formé en une seule pièce, ensemble avec le récipient intérieur (14), à partir de l'ébauche tubulaire en étant calibré sur la buse de soufflage et pourvu d'un orifice de prélèvement.

4. Conteneur sur palette (10) comprenant une palette (12), un récipient en matière synthétique (14) disposé sur ladite palette et une enveloppe de support (16) entourant étroitement le récipient en matière synthétique (14) et fixé solidement (mais de manière amovible) sur la palette (12), *caractérisé en ce que* deux zones d'angle du récipient intérieur en matière synthétique (14), diamétralement opposées l'une à l'autre, situées chacune entre deux parois latérales contiguës, comportent une ligne de jointure soudée (30) verticale de l'ébauche tubulaire.

5. Machine de moulage par soufflage du récipient intérieur en matière synthétique (14) d'un conteneur sur palette (10) conforme à l'une des revendications 1 à 4, dans un moule de soufflage composé de deux moitiés de moule (38) déplaçables horizontalement et comportant du côté du fond une buse de soufflage (40) et en tant que de besoin un mandrin extensible *caractérisée en ce que* le manchon (28) de la soupape de prélèvement (20) est formé et calibré sur la buse de soufflage (40) et *par* un enfoncement rond (42) prévu latéralement, sensiblement dans la zone médiane du moule, respectivement dans chaque moitié de moule (38), dans lequel est formé le collet de bonde (24) pour l'ouverture de remplissage du récipient en matière synthétique (14).

6. Machine de moulage par soufflage selon la revendication 5 *caractérisée par* une aiguille de soufflage (44) prévue dans l'enfoncement latéral rond (42).

7. Machine de moulage par soufflage selon les revendications 5 ou 6 *caractérisée en ce que* les bords de serrage supérieur et inférieur dans les deux moitiés de moule (38) permettant de serrer l'ébauche tubulaire, présentent une forme ondulée ou en zigzag.

8. Procédé de fabrication de récipients intérieurs en matière synthétique (14) pour conteneurs sur palette (10) conformes à l'une des revendications 1 à 4, formés dans une machine de moulage par soufflage conforme à l'une des revendications 5 à 7, selon lequel une ébauche tubulaire est extrudée depuis le haut par une fière d'extrudeuse entre les moitiés ouvertes d'un moule de soufflage composé de deux moitiés (38) déplaçables horizontalement, sur la buse de soufflage (40) disposée en bas entre les deux moitiés de moule ouvertes, et, après fermeture des moitiés de moule (38), de l'air est insufflé par la buse de soufflage (40) dans l'ébauche tubulaire jusqu'à ce que cette dernière soit appliquée sur la paroi intérieure du moule de soufflage, *caractérisé en ce que* le manchon de sortie (28) pour la soupape de prélèvement (20) du récipient intérieur en matière synthétique (14), disposée du côté du fond, est formé et calibré sur la buse de soufflage (40) et *en ce que* le collet de bonde (24) pour l'ouverture de remplissage de plus grand diamètre est formé à partir de la zone médiane de l'ébauche tubulaire, dans l'enfoncement correspondant (42) prévu à peu près à mi hauteur dans la zone médiane du moule de soufflage, le filetage du collet de bonde (24) étant formée simultanément par soufflage.

9. Procédé selon la revendication 8 *caractérisé en ce que* en vue d'accélérer le refroidissement du récipient intérieur en matière synthétique (14), un fluide caloporteur est insufflé ou introduit dans ledit récipient par la buse de soufflage (40) ou/et par une aiguille de soufflage (44) séparée.
